# EUROPÄISCHE PATENTANMELDUNG

(11) **EP 3 252 440 A1**
(43) Veröffentlichungstag der Anmeldung: **06.12.2017**
(21) Anmeldenummer: 17000775.1
(22) Anmeldetag: 05.05.2017
(51) Int. Cl.: G01F 15/06, G01F 15/07

(54) **VERFAHREN ZUM BETRIEB EINER ZÄHLEREINRICHTUNG FÜR EIN FLUID, ZÄHLEREINRICHTUNG UND ZÄHLERSYSTEM**

(30) Priorität: 03.06.2016 DE 102016006812
(71) Anmelder: Diehl Metering Systems GmbH, 90451 Nürnberg (DE)
(72) Erfinder: Gottschalk, Roland, DE - 90530 Wendelstein (DE); Schmidt, Markus, DE - 91580 Wicklesgreuth (DE); Gottschalk, Klaus, DE - 90610 Winkelhaid (DE)
(74) Vertreter: Diehl Patentabteilung

(57) **Zusammenfassung**

Verfahren zum Betrieb einer Zählereinrichtung (1) für ein Fluid, die über eine Anschlussvorrichtung an einer wenigstens eine von dem Fluid durchflossene Leitung (4) aufweisenden Zählerstelle (2) anschließbar ist und eine Steuereinrichtung (10) aufweist, die bei Anschluss über wenigstens einen für die Zählerstelle (2) und/oder eine Zählerstellenumgebung spezifischen Betriebsparameter konfiguriert wird, wobei, zumindest bei Inbetriebnahme der Zählereinrichtung (1), die Betriebsparameter durch eine zählereinrichtungsseitige Kommunikationseinrichtung (12) von einer zählerstellenseitigen, passiven Kommunikationseinrichtung (7), in deren Speichereinrichtung (9) die Betriebsparameter abgespeichert sind, drahtlos per Funk über eine Kommunikationsverbindung abgerufen und zur Konfiguration der Steuereinrichtung (10) verwendet werden.

## Beschreibung

Die Erfindung betrifft ein Verfahren zum Betrieb einer Zählereinrichtung für ein Fluid, die über eine Anschlussvorrichtung an einer wenigstens eine von dem Fluid durchflossene Leitung aufweisenden Zählerstelle anschließbar ist und eine Steuereinrichtung aufweist, die bei Anschluss über wenigstens einen für die Zählerstelle und/oder eine Zählerstellenumgebung spezifischen Betriebsparameter konfiguriert wird, eine Zählereinrichtung für ein Fluid und ein Zählersystem für ein Fluid.

Zählereinrichtungen für Fluide, häufig auch kurz als "Zähler" bezeichnet, sind im Stand der Technik bereits weitgehend bekannt und dienen dazu, Verbrauchsdaten des Fluids zu ermitteln, beispielsweise im häuslichen Bereich für Heizungswärme, für Warmwasser sowie für Kaltwässer. Solche Zählereinrichtungen weisen üblicherweise wenigstens ein Rechenwerk in einem Gehäuse auf, welches mit einem Geber, insbesondere einem Volumengeber, und gegebenenfalls weiteren Sensoren/Fühlern verbunden ist, welche gegebenenfalls auch extern als Teil der Zählerstelle vorgesehen sein können. Beispielsweise sind Wärmezähler als Zählereinrichtungen bekannt, bei denen ein Rechenwerk mit einem Volumengeber sowie zwei Temperaturfühlern verbunden ist, wobei die Wärmezählung durch kontinuierliche Erfassung des durchgeflossenen Volumens und der Temperaturdifferenz zwischen der Vorlauftemperatur und der Rücklauftemperatur erfolgt. Für einfache Zählereinrichtungen, die lediglich den Verbrauch des Fluids selbst messen sollen, ist häufig ein Volumengeber bereits ausreichend. Dabei sind eine Vielzahl unterschiedlicher Arten von Volumengebern im Stand der Technik bekannt, beispielsweise mechanische Volumengeber (beispielsweise Flügelradzähler), magnetisch induktiv arbeitende Volumengeber und Ultraschall-Volumengeber. Diese liefern beispielsweise Messpulse an ein Rechenwerk, das diese interpretieren muss.

Das Rechenwerk wiederum bildet Teil einer Steuereinrichtung für die Zählereinrichtung, welcher verschiedene Betriebsparameter bekannt sein müssen, um korrekt für die aktuelle Zählerstelle kontiguriert zu sein. Weist beispielsweise die Zählereinrichtung ferner eine Sendeeinrichtung auf, mit der drahtlos Verbrauchsdaten, die durch das Rechenwerk ermittelt wurden, an eine Datensammeleinrichtung für Verbrauchsdaten gesendet werden sollen, muss zum einen bekannt sein, wie die Kommunikationsverbindung mit der Datensammeleinrichtung hergestellt werden kann, zum anderen aber müssen wenigstens dann, wenn mehrere Zählereinrichtungen ihre Verbrauchsdaten an die Datensammeleinrichtung senden, den Verbrauchsdaten eine Identifikationsinformation der Zählerstelle für eine korrekte Zuordnung zugeordnet sein. Ein weiteres Beispiel für einen Betriebsparameter ist ein Startzählerstand, der genutzt werden soll, wenn die Zählereinrichtung in der Zählerstelle ihren Betrieb aufnimmt.

Um die Konfiguration einer Zählereinrichtung auf eine Zählerstelle mit wenigstens einer Fluidleitung, durch die das Fluid geführt wird, zu ermöglichen, sind bereits verschiedene Ansätze bekannt. So ist es zum einen möglich, die Zählereinrichtung selbst mit einem Eingabemittel zu versehen bzw. die Zählereinrichtung mit einem Eingabemittel zu verbinden, so dass manuell die benötigten Betriebsparameter an die Steuereinrichtung übermittelt werden können oder aber unmittelbar die passende Konfiguration erfolgen kann. Eine Übermittlung von Betriebsparametern an die Zählereinrichtung kann auch mithilfe einer optischen Diode und einer passenden Gegenstelle erfolgen, wobei die Konfigurierung bzw. Parametrierung wiederum durch eine Servicekraft erfolgen muss. Es sei noch angemerkt, dass derartige, über eine Steuereinrichtung Eigenintelligenz aufweisende Zählereinrichtungen häufig auch als "smart meter" bezeichnet werden.

Der Erfindung liegt somit die Aufgabe zugrunde, eine Vereinfachung der Konfiguration und/oder Parametrierung einer Zählereinrichtung nach dem Einbau an der Zählerstelle zu ermöglichen.

Zur Lösung dieser Aufgabe ist bei einem Verfahren der eingangs genannten Art erfindungsgemäß vorgesehen, dass, zumindest bei Inbetriebnahme der Zählereinrichtung, die Betriebsparameter durch eine zählereinrichtungsseitige Kommunikationseinrichtung von einer zählerstellenseitigen, passiven Kommunikationseinrichtung, in deren Speichereinrichtung die Betriebsparameter abgespeichert sind, drahtlos per Funk über eine Kommunikationsverbindung abgerufen und zur Konfiguration der Steuereinrichtung verwendet werden.

Die der Erfindung zugrunde liegende Idee ist es also, über eine idealerweise kurzreichweitige Kommunikationsverbindung die zur Konfiguration benötigten Betriebsparameter automatisch bei Inbetriebnahme der Zählereinrichtung von einer passiven Kommunikationseinrichtung, die eine Speichereinrichtung aufweist, in der die Betriebsparameter gespeichert sind, abzurufen und ebenso vollautomatisch durch die Steuereinrichtung zur Konfiguration der Zählereinrichtung, also des smart meter, zu verwenden. Die zählerstellenseitige Kommunikationseinrichtung ist passiv, das bedeutet, sie wird nicht selbständig sendend tätig, sondern erst auf eine Aktivierungsanforderung hin, insbesondere also auf ein Abfragesignal der zählereinrichtungsseitigen Kommunikationseinrichtung hin. Somit wird seitens der passiven, zählerstellenseitigen Kommunikationseinrichtung keine Energieversorgung bzw. ständig aktive Energiequelle benötigt. Seitens der Steuereinrichtung wird dieser Konfigurationsvorgang automatisch durchgeführt, das bedeutet, die Steuereinrichtung steuert die zählerstellenseitige Kommunikationseinrichtung zur Abfrage der Betriebsparameter an und konfiguriert sich bzw. ihre Komponenten, insbesondere ein Rechenwerk, dann automatisch entsprechend. Nachdem die zählerstellenseitige Kommunikationseinrichtung passiv ist, kann sie als eine Art "Funkbeschriftung" aufgefasst werden.

Damit erreicht die vorliegende Erfindung den Vorteil, dass jeglicher Konfigurations- und/oder Parametrierungsaufwand der Zählereinrichtung seitens einer Servicekraft entfällt. Die Zählereinrichtung muss lediglich an der Zählerstelle eingebaut und in Betrieb genommen werden, so dass vollautomatisch die korrekte Konfiguration auf die Zählerstelle erfolgt. Die Inbetriebnahme der Zählereinrichtung kann intern in der Steuereinrichtung durch ein Triggersignal abgebildet werden, wobei vorgesehen sein kann, dass, insbesondere bis zur automatisch erfolgten ersten Konfiguration, nach einem die Konfiguration triggernden Konfigurationssignal bzw. Inbetriebnahmesignal zyklisch ein Anfragesignal an zählerstellenseitige Kommunikationseinrichtungen ausgesendet wird. Dabei sei darauf hingewiesen, dass ein Konfigurationssignal selbstverständlich auch durch Benutzerinteraktion erzeugt werden kann, beispielsweise über ein geeignetes internes oder externes Eingabemittel, um eine Neukonfiguration benutzerinitiiert auszulösen, welche jedoch wiederum vollständig automatisch geschieht, nachdem sich die passive, zählerstellenseitige Kommunikationseinrichtung in Kommunikationsreichweite der Zählereinrichtung bzw. ihrer zählerstellenseitigen Kommunikationseinrichtung befindet. Sollte dies nicht der Fall sein, sollte mithin beispielsweise auf das zyklische Anfragesignal nach einer einen Schwellwert überschreitenden Anzahl an Wiederholungen keine Antwort von einer zählerstellenseitigen, passiven Kommunikationseinrichtung erfolgen, kann ein Fehlersignal ausgegeben werden.

Mit besonderem Vorteil kann als zählerstellenseitige Kommunikationseinrichtung ein RFID-Transponder und/oder eine Nahbereichskommunikationseinrichtung (NFC-Einrichtung; NFC = Near Field Communication) verwendet werden. Insbesondere RFID-Transponder sind im Stand der Technik in anderen Anwendungsgebieten bereits bekannt. Sie umfassen zumeist eine Antenne und einen Mikrochip mit Speichereinrichtung, wobei die Antenne genutzt wird, um Anfragesignale zu empfangen, die gleichzeitig die benötigte Energie liefern, um die Betriebsparameter, die in der Speichereinrichtung des RFID-Transponders abgelegt sind, zu übermitteln. Entsprechend wird ein RFID-Reader als zähleinrichtungsseitige Kommunikationseinrichtung benötigt. Aber auch andere Arten der Nahbereichskommunikation (NFC) können im Rahmen der vorliegenden Erfindung eingesetzt werden, beispielsweise NFC-Einrichtungen bzw. Schnittstellen, wie sie heutzutage aus Mobiltelefonen bekannt sind. Ist die zählerstellenseitige Kommunikationseinrichtung als eine solche NFC-Einrichtung ausgebildet, ist zählereinrichtungsseitig als Kommunikationseinrichtung eine entsprechende NFC-Schnittstelle vorzusehen.

Dabei ist es im Übrigen ferner zweckmäßig, wenn die Kommunikationsreichweite der Kommunikationsverbindung zwischen den Kommunikationseinrichtungen weniger als 20 cm, insbesondere weniger als 10 cm, beträgt. Auf diese Weise kann sichergestellt werden, dass auch bei benachbarten Zählerstellen nur die passive, zählerstellenseitige Kommunikationseinrichtung ausgelesen wird, die auch der Zählerstelle zugeordnet ist, in die die Zählereinrichtung verbaut wurde.

Zweckmäßig ist es ferner, wenn die zählerstellenseitige Kommunikationseinrichtung in ein Beschriftungsetikett der Zählerstelle integriert ist. Auf diese Weise wird also eine optische, durch einen Bediener bzw. eine Servicekraft lesbare Kennzeichnung der Zählerstelle mit einer elektronisch und drahtlos seitens der Zählereinrichtung auslesbaren "Funkbeschriftung" kombiniert, wobei beispielsweise ein RFID-Transponder in ein Kunststoffschild integriert werden kann und/oder ein bedrucktes RFID-Label verwendet werden kann. Diese elektronische und gegebenenfalls auch optische "Beschriftung" wird spätestens beim ersten Einsatz der Zählerstelle vom Versorger mit den benötigten Initialwerten für die Betriebsparameter beschrieben.

Es kann ferner vorgesehen sein, dass die Kommunikationsverbindung magnetische Wechselfelder und/oder eine Frequenz im Bereich von 13 bis 14 MHz verwendet. Insbesondere kann vorgesehen sein, dass die Kommunikation mittels magnetischem Wechselfeld auf einer Frequenz von 13,56 MHz verwendet wird, was sich bei der Verwendung von RFID-Technologie und NFC-Technologie jeweils als zweckmäßig erweist.

Vorzugsweise können als Betriebsparameter eine Identifikationsinformation der Zählerstelle und/oder ein Startzählerstand und/oder Kommunikationsdaten zur Herstellung einer Kommunikationsverbindung mit einer Datensammeleinrichtung für Verbrauchsdaten der Zählereinrichtung verwendet werden. Insbesondere ist also seitens der Zählereinrichtung, insbesondere als Teil der Steuereinrichtung, eine Sendeeinrichtung vorgesehen, über die mittels des Rechenwerks, das auch Teil der Steuereinrichtung ist, bestimmte Verbrauchsdaten an eine Datensammeleinrichtung drahtlos, insbesondere per Funk, übertragen werden können. Dabei ist den Verbrauchsdaten zumindest dann, wenn die Datensammeleinrichtung Verbrauchsdaten mehrerer Zählereinrichtungen empfängt, auch eine Identifikationsinformation zuzuordnen. In einer solchen Konfiguration sind als Betriebsparameter also entsprechend die Identifikationsinformation und die Kommunikationsdaten zur Herstellung der Sendeverbindung mit der Datensammeleinrichtung vorzuhalten und entsprechend automatisch zur Konfiguration zu verwenden. Eine weitere nützliche Information zur Konfiguration der Zählereinrichtung ist ein Startzählerstand, von dem an die Verbrauchsdaten gezählt werden sollen.

Die zählerstellenseitige Kommunikationseinrichtung kann bei Installation der Zählerstelle an der Zählerstelle angebracht werden, wobei die Betriebsparameter eingespeichert sind oder werden. Das bedeutet, sobald die Zählerstelle für das Fluid bereitgestellt wird, um eine Zählereinrichtung aufzunehmen, wird auch die elektronische "Beschriftung" sogleich angebracht, wobei diese bereits die Betriebsparameter in ihrer Speichereinrichtung enthalten kann oder aber die Betriebsparameter dann entsprechend in die Speichereinrichtung eingespielt werden.

In einer bevorzugten Weiterbildung des erfindungsgemäßen Verfahrens ist vorgesehen, dass die Zählereinrichtung, insbesondere bei Herstellung der Kommunikationsverbindung, die zum Betrieb der zählerstellenseitigen Kommunikationseinrichtung benötigte Energie an die zählerstellenseitige Kommunikationseinrichtung überträgt. Beispielsweise bei den bekannten RFID-Ausgestaltungen ist es häufig bereits so, dass die RFID-Transponder keine eigene Energiequelle aufweisen bzw. keine Energieversorgungsverbindung benötigen, sondern die in dem Anfragesignal bzw. sonstigen, die RFID-Transponder ansprechenden Signal enthaltene Energie zumindest kurzzeitig speichern und zum Betrieb der dortigen Steuereinheit, insbesondere des Mikrochips, verwenden. Auch für NFC-Einrichtungen sind derartige Konzepte bereits vorgeschlagen worden. So wird es auch erfindungsgemäß bevozugt, dass die passive, zählerstellenseitige Kommunikationseinrichtung weder eine eigene Energiequelle noch eine Energieversorgungsleitung benötigt.

In einer besonders bevorzugten Ausgestaltung der vorliegenden Erfindung kann vorgesehen sein, dass bei Vorliegen eines Aktualisierungssignals in der Zählereinrichtung veränderte, aktualisierte Betriebsparameter über die Kommunikationsverbindung an die zählerstellenseitige Kommunikationseinrichtung übertragen werden, welche die aktualisierten Betriebsparameter in der Speichereinrichtung speichert. Das bedeutet, dass immer dann, wenn die Zählereinrichtung während ihrer Lebensdauer die Konfiguration/Parametrierung verändert bzw. ausgetauscht wird und als Initialwerte der Betriebsparameter für die folgende Zählereinrichtung von den ursprünglichen Werten unterschiedliche Werte verwendet werden sollen, beispielsweise was den Startzählerstand angeht, werden diese neuen, aktualisierten Werte der Betriebsparameter mithilfe der Kommunikationsverbindung in die Speichereinrichtung der zählerstellenseitigen Kommunikationseinrichtung geschrieben. Auf diese Weise kann eine vollautomatische Konfiguration/Parametrierung auch bei Austausch der Zählereinrichtung erfolgen. Insbesondere kann mithin vorgesehen sein, dass bei einem Austausch der Zählereinrichtung seitens der alten Zählereinrichtung, insbesondere benutzerinitiiert, eine Aktualisierung der Betriebsparameter in der zählerstellenseitigen Kommunikationseinrichtung erfolgt und nach Installation der neuen Zählereinrichtung diese nach Abruf der aktualisierten Betriebsparameter mittels diesen konfiguriert wird. Ein Aktualisierungssignal, mittels welchem aktualisierte Betriebsparameter an die zählerstellenseitige Kommunikationseinrichtung übermittelt werden, kann hierbei automatisch, beispielsweise bei einem "Herunterfahren" der Zählereinrichtung, entstehen, und/oder auch benutzerinitiiert eingeleitet werden, wobei ein automatisches Entstehen eines Aktualisierungssignals auch bei einer Aktualisierung der Konfiguration, welche eine Veränderung der Werte der Betriebsparameter beinhaltet, vorgesehen sein kann. Somit ist eine vollständig oder zumindest fast vollständig automatische Konfiguration einer neuen Zählereinrichtung bzw. Rekonfiguration derselben Zählereinrichtung nach einem Neustart möglich.

Neben dem Verfahren betrifft die Erfindung auch eine Zählereinrichtung, aufweisend eine zählerstellenseitige Kommunikationseinrichtung zur drahtlosen Kommunikation per Funk mit einer zählerstellenseitigen, passiven Kommunikationseinrichtung und eine Steuereinrichtung, die zur Ansteuerung der zählereinrichtungsseitigen Kommunikationseinrichtung zum Abruf von Betriebsparametern von der zählerstellenseitigen Kommunikationseinrichtung und zur Konfiguration der Zählereinrichtung gemäß der abgerufenen Betriebsparameter ausgebildet ist. Sämtliche Ausführungen bezüglich des erfindungsgemäßen Verfahrens lassen sich analog auf die erfindungsgemäße Zählereinrichtung übertragen, mit welcher ebenso die bereits genannten Vorteile erreicht werden können.

Dabei sei an dieser Stelle noch angemerkt, dass die zählereinrichtungsseitige Kommunikationseinrichtung zum einen auch als Teil der Steuereinrichtung realisiert werden kann; insbesondere sogar kann vorgesehen sein, dass die Steuereinrichtung und die zählereinrichtungsseitige Kommunikationseinrichtung integriert realisiert sind. So wurden beispielsweise Mikrokontroller vorgeschlagen, in die bereits eine Nahbereichskommunikationsschnittstelle integriert ist, beispielsweise also eine Nahbereichskommunikationseinrichtung bzw. ein RFID-Reader. Damit lässt sich eine äußerst kompakte Ausgestaltung der Zählereinrichtung realisieren.

Schließlich betrifft die Erfindung auch ein Zählersystem, umfassend eine erfindungsgemäße Zählereinrichtung und eine zählerstellenseitige Kommunikationseinrichtung mit einer Speichereinrichtung für die Betriebsparameter. Das Zählersystem ist insbesondere zur Durchführung des erfindungsgemäßen Verfahrens ausgebildet. Sämtliche Ausführungen bezüglich des erfindungsgemäßen Verfahrens und der erfindungsgemäßen Zählereinrichtung gelten analog für das erfindungsgemäße Zählersystem fort.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze einer Zählerstelle mit eingebauter Zählereinrichtung,
- Fig. 2: ein erfindungsgemäßes Zählersystem, und
- Fig. 3: einen Ablaufplan eines Verfahrens zur Konfiguration einer Zählereinrichtung auf eine Zählerstelle.

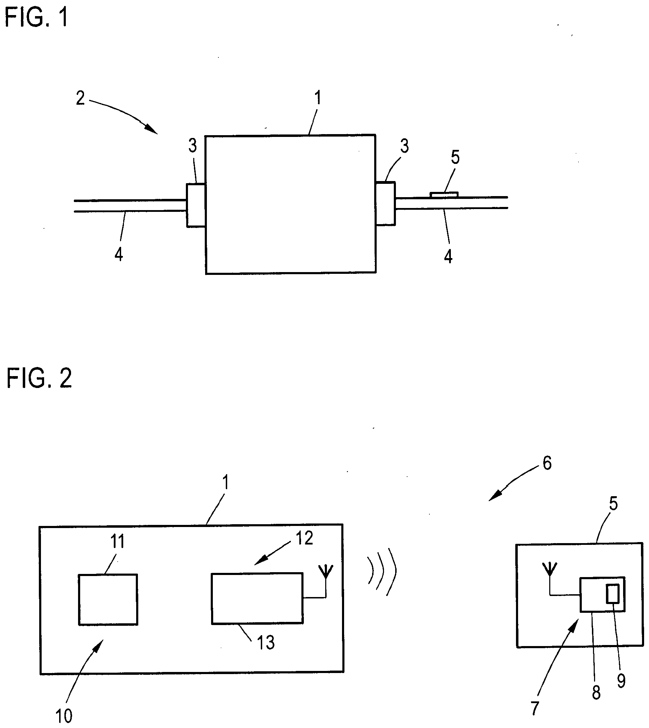

Fig. 1 zeigt eine Prinzipskizze einer Zählereinrichtung 1, die an einer Zählerstelle 2 mittels entsprechenden Montagemitteln 3 verbaut wurde. Seitens einer der Fluidleitungen 4 ist ersichtlich ein Beschriftungsetikett 5 vorgesehen, das neben einer optisch lesbaren, an das Servicepersonal gerichteten Beschreibung der Zählerstelle 2 auch eine zählerstellenseitige Kommunikationseinrichtung enthält, die zur vollständig automatischen Konfiguration der eingebauten Zählereinrichtung 1 bei Inbetriebnahme mit einer zählereinrichtungsseitigen Kommunikationseinrichtung kommuniziert.

Das entsprechende Zählersystem 6 bzw. Kommunikationssystem ist in Fig. 2 genauer dargestellt. Ersichtlich enthält das Beschriftungsetikett 5, das beispielsweise als ein Kunststoffschild ausgebildet sein kann, eine passive, zählerstellenseitige Kommunikationseinrichtung 7, die vorliegend als eine RFID-Einrichtung 8 (RFID-Transponder) ausgebildet ist. Die Kommunikationseinrichtung 7 umfasst eine Speichereinrichtung 9, in der Betriebsparameter zur Konfiguration der Zählereinrichtung 1 gespeichert sind. Die Betriebsparameter umfassen vorliegend Kommunikationsdaten zur Herstellung einer Sendeverbindung zu einer Datensammeleinrichtung, an die eine hier nicht näher dargestellte Sendeeinrichtung der Zählereinrichtung 1 drahtlos Verbrauchsdaten übermitteln soll, eine Identifikationsinformation der Zählerstelle 2, die den an die Datensammeleinrichtung zu übertragenden Verbrauchsdaten zuzuordnen ist sowie einen Startzählerstand.

Die Zählereinrichtung 1 umfasst als Steuereinrichtung 10 vorliegend einen Mikrokontroller 11, der auch als Rechenwerk zur Auswertung von Sensordaten eines hier nicht näher gezeigten Gebers, insbesondere Volumengebers, ausgebildet ist. Daneben ist eine zählereinrichtungsseitige Kommunikationseinrichtung 12 vorgesehen, hier ein RFID-Reader 13, der auch integral mit dem Mikrokontroller 11 ausgebildet sein kann.

Wie erwähnt sind weitere Komponenten der Zählereinrichtung 1 der Übersichtlichkeit halber nicht näher dargestellt. Die Steuereinrichtung 10 ist nun dazu ausgebildet, die Kommunikationseinrichtung 12 zumindest bei Inbetriebnahme der Zählereinrichtung 1 zum zyklischen Aussenden eines Anfragesignals an zählerstellenseitige Kommunikationseinrichtungen 7 anzusteuern, so dass vorliegend die konkret vorhandene zählerstellenseitige Kommunikationseinrichtung 7, welche durch das Anfragesignal, wie bei RFID-Systemen grundsätzlich bekannt, ihre Energie erhält, um die Betriebsparameter aus der Speichereinrichtung 9 an die zählereinrichtungsseitige Kommunikationseinrichtung 12 zu übermitteln. Dort empfangen werden die Betriebsparameter wiederum vollautomatisch genutzt, um die Konfiguration der Zählereinrichtung 1 auf die Zählerstelle 2 mittels der Steuereinrichtung 10 zu ermöglichen.

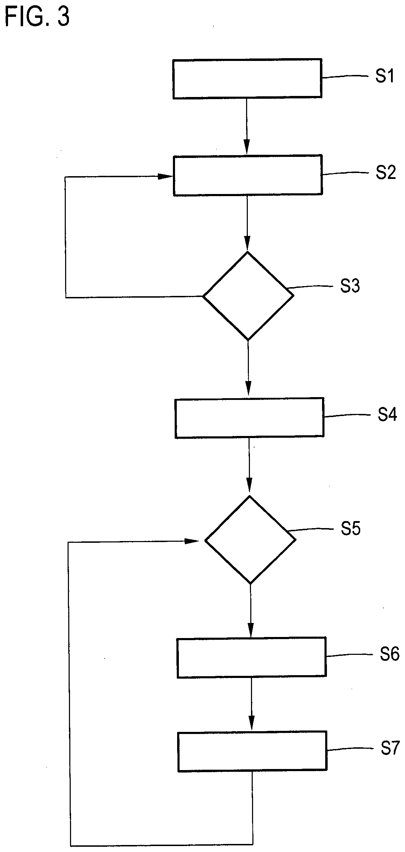

Fig. 3 zeigt einen Ablaufplan eines Ausführungsbeispiels des erfindungsgemäßen Verfahrens. Dabei wird in einem Schritt S1 nach Einbau der Zählereinrichtung 1 an der Zählerstelle 2 die Zählereinrichtung 1 in Betrieb genommen, wodurch ein Konfigurationssignal entsteht, das die vollautomatische Konfiguration triggert. Entsprechend wird in einem Schritt S2 damit begonnen, zyklisch ein Anfragesignal an die zählerstellenseitige Kommunikationseinrichtung 7 mittels der zählerstellenseitigen Kommunikationseinrichtung 12 auszusenden. In einem Schritt S3 wird überprüft, ob als Antwort Betriebsparameter empfangen wurden. Ist dies nicht der Fall, wird mit der zyklischen Aussendung des Anfragesignals fortgefahren, insbesondere, bis eine vorbestimmte Anzahl von Versuchen, die Kommunikationseinrichtung 7 zu kontaktieren, fehlgeschlagen ist, woraufhin ein Fehlersignal ausgegeben werden kann, das auf eine notwendige manuelle Konfiguration hinweist.

Wurden jedoch im Schritt S3 Betriebsparameter als Antwort erhalten, erfolgt in einem Schritt S4 die vollständig automatische Konfiguration der Zählereinrichtung 1 unter Nutzung der Betriebsparameter durch die Steuereinrichtung 10.

Im weiteren Verlauf wird im Schritt S5 überprüft, ob in der Zählereinrichtung 1 ein den bevorstehenden Austausch der Zählereinrichtung 1 und/oder eine Veränderung der Konfiguration, die mit aktualisierten Betriebsparametern einhergeht, anzeigendes Aktualisierungssignal vorliegt. Ist dies der Fall, steuert in einem Schritt S6 die Steuereinrichtung 10 die Kommunikationseinrichtung 12 zum Aussenden eines Aktualisierungssignals an, welches in einem Schritt S7 von der zählerstellenseitigen Kommunikationseinrichtung 7 empfangen wird. Die mit übertragene Energie wird genutzt, um die Werte der Betriebsparameter in der Speichereinrichtung 9 ebenso im Schritt S7 zu aktualisieren, indem die neu empfangenen Werte des Aktualisierungssignals eingetragen werden.

Bei einer nun folgenden Rekonfiguration der Zählereinrichtung 1 oder nach Einbau einer neuen Zählereinrichtung 1 und deren Inbetriebnahme werden zur Konfiguration dann die aktualisierten Betriebsparameter in der Speichereinrichtung 9 genutzt.

Es sei abschließend noch angemerkt, dass zur Kommunikation zwischen den Kommunikationseinrichtungen 7 und 12, wie bei RFID-Systemen grundsätzlich bekannt, magnetische Wechselfelder bei einer Frequenz von 13,56 MHz verwendet werden. Ferner sei darauf hingewiesen, dass alternativ zur hier beschriebenen RFID-Technologie auch sonstige NFC-Technologien verwendet werden können, bei denen die Kommunikationsreichweite ebenso, wie hier vorgesehen, weniger als 20 cm, bevorzugt weniger als 10 cm, beträgt.

Ferner sei noch darauf hingewiesen, dass das Beschriftungsetikett 5 bei Installation der Zählerstelle 2 selbst bereits durch einen Versorger angebracht werden kann, wobei die Betriebsparameter bereits eingespeichert sind oder aber dann eingespeichert werden.

### Bezugszeichenliste

- 1: Zählereinrichtung
- 2: Zählerstelle
- 3: Montagemittel
- 4: Fluidleitung
- 5: Beschriftungsetikett
- 6: Zählersystem
- 7: zählerstellenseitige Kommunikationseinrichtung
- 8: RFID-Einrichtung
- 9: Speichereinrichtung
- 10: Steuereinrichtung
- 11: Mikrokontroller
- 12: zähleinrichtungsseitige Kommunikationseinrichtung
- 13: RFID-Reader

- S1 - S7: Schritt

## Patentansprüche

1. Verfahren zum Betrieb einer Zählereinrichtung (1) für ein Fluid, die über eine Anschlussvorrichtung an einer wenigstens eine von dem Fluid durchflossene Leitung (4) aufweisenden Zählerstelle (2) anschließbar ist und eine Steuereinrichtung (10) aufweist, die bei Anschluss über wenigstens einen für die Zählerstelle (2) und/oder eine Zählerstellenumgebung spezifischen Betriebsparameter konfiguriert wird, **dadurch gekennzeichnet, dass**, zumindest bei Inbetriebnahme der Zählereinrichtung (1), die Betriebsparameter durch eine zählereinrichtungsseitige Kommunikationseinrichtung (12) von einer zählerstellenseitigen, passiven Kommunikationseinrichtung (7), in deren Speichereinrichtung (9) die Betriebsparameter abgespeichert sind, drahtlos per Funk über eine Kommunikationsverbindung abgerufen und zur Konfiguration der Steuereinrichtung (10) verwendet werden.

2. Verfahren nach Anspruch 1, **dadurch gekennzeichnet, dass** als zählerstellenseitige Kommunikationseinrichtung (7) ein RFID-Transponder (8) und/oder eine Nahbereichskommunikationseinrichtung verwendet wird und/oder die Kommunikationsreichweite der Kommunikationsverbindung weniger als 20 cm, insbesondere weniger als 10 cm, beträgt und/oder die zählerstellenseitige Kommunikationseinrichtung in ein Beschriftungsetikett (5) der Zählerstelle (2) integriert ist.

3. Verfahren nach Anspruch 1 oder 2, **dadurch gekennzeichnet, dass** die Kommunikationsverbindung magnetische Wechselfelder und/oder eine Frequenz im Bereich von 13 bis 14 MHz, insbesondere von 13,56 MHz, verwendet.

4. Verfahren nach einem der vorangehenden Ansprüche, **dadurch gekennzeichnet, dass** als Betriebsparameter eine Identifikationsinformation der Zählerstelle (2) und/oder ein Startzählerstand und/oder Kommunikationsdaten zur Herstellung einer Kommunikationsverbindung mit einer Datensammeleinrichtung für Verbrauchsdaten der Zählereinrichtung (1) verwendet werden.

5. Verfahren nach einem der vorangehenden Ansprüche, dadurch , dass bei Installation der Zählerstelle (2) die zählerstellenseitige Kommunikationseinrichtung (7) an der Zählerstelle (2) angebracht wird, wobei die Betriebsparameter eingespeichert sind oder werden.

6. Verfahren nach einem der vorangehenden Ansprüche, **dadurch gekennzeichnet, dass** die Zählereinrichtung (1), insbesondere bei Herstellung der Kommunikationsverbindung, die zum Betrieb der zählerstellenseitigen Kommunikationseinrichtung (7) benötigte Energie an die zählerstellenseitige Kommunikationseinrichtung (7) drahtlos überträgt.

7. Verfahren nach einem der vorangehenden Ansprüche, **dadurch gekennzeichnet, dass** bei Vorliegen eines Aktualisierungssignals in der Zählereinrichtung (1) veränderte, aktualisierte Betriebsparameter über die Kommunikationsverbindung an die zählerstellenseitige Kommunikationseinrichtung (7) übertragen werden, welche die aktualisierten Betriebsparameter in der Speichereinrichtung (9) speichert.

8. Verfahren nach Anspruch 7, **dadurch gekennzeichnet, dass** bei einem Austausch der Zählereinrichtung (1) seitens der alten Zählereinrichtung (1), insbesondere benutzerinitiiert, eine Aktualisierung der Betriebsparameter in der zählerstellenseitigen Kommunikationseinrichtung (7) erfolgt und nach Installation der neuen Zählereinrichtung (1) diese nach Abruf der aktualisierten Betriebsparameter mittels diesen konfiguriert wird.

9. Zählereinrichtung (1), aufweisend eine zählereinrichtungsseitige Kommunikationseinrichtung (12) zur drahtlosen Kommunikation per Funk mit einer zählerstellenseitigen, passiven Kommunikationseinrichtung (7) und eine Steuereinrichtung (10), die zur Ansteuerung der zählereinrichtungsseitigen Kommunikationseinrichtung (12) zum Abruf von Betriebsparametern von der zählerstellenseitigen Kommunikationseinrichtung (7) und zur Konfiguration der Zählereinrichtung (1) gemäß der abgerufenen Betriebsparameter ausgebildet ist.

10. Zählersystem (6), umfassend eine Zählereinrichtung (1) gemäß Anspruch 9 und die zählerstellenseitige Kommunikationseinrichtung (7) mit einer Speichereinrichtung (9) für die Betriebsparameter.
